# EUROPÄISCHE PATENTANMELDUNG

(11) **EP 3 151 073 A1**
(43) Veröffentlichungstag der Anmeldung: **05.04.2017**
(21) Anmeldenummer: 15187409.6
(22) Anmeldetag: 29.09.2015
(51) Int. Cl.: G05B 19/408

(54) **VERFAHREN UND STEUERVORRICHTUNG ZUM OPTIMIERTEN STEUERN EINER WERKZEUGMASCHINE**

(71) Anmelder: Siemens Aktiengesellschaft, 80333 München (DE)
(72) Erfinder: Bretschneider, Jochen, 73732 Esslingen (DE)

(57) **Zusammenfassung**

Die Erfindung betrifft ein Verfahren nach dem Oberbegriff des Anspruch 1 umfassend der Schritte:
- Erfassung von Istparametern (24) des Bearbeitungsprozesses durch eine Feedbackschleife (21),
- Iterative Optimierung des Bahnprogramms (6) anhand der erfassten Istparameter (24) zur Generierung eines neuen Bahnprogramm_neu (26) mit einer neuen Bahn_neu, welche während der Bearbeitung der Werkzeugmaschine zugeführt werden und welche das bisherige Bahnprogramm (6) und die bisherige Bahn dynamisch ändern und/oder dynamisch ersetzen.

Ferner betrifft die Erfindung eine Steuervorrichtung.

## Beschreibung

Die Erfindung betrifft ein Verfahren zum Erzeugen von Steuerdaten zum Steuern eines Werkzeugs an einer Werkzeugmaschine zum Bearbeiten eines eingespannten Werkstücks durch einen Bearbeitungsprozess, insbesondere Zerspanen, wobei die Werkzeugmaschine eine Steuervorrichtung und ein Werkzeug umfasst, zum Steuern des Werkzeugs in Bezug auf das eingespannte Werkstück mit einer dreidimensionalen freien Werkzeugbewegung durch Erzeugen eines Bahnprogramms anhand von einer Sollgeometrie generierten Sollparameter zur Steuerung der Werkzeugmaschine, wobei das Bahnprogramm zumindest eine Bahn beschreibt, wobei die Bahn aus mehreren Stützpunkten und Linienelementen besteht und jedes Linienelementen ein Paar der Stützpunkte miteinander verbindet, und die Steuerung der Werkzeugmaschine entsprechend des erzeugten Bahnprogramms erfolgt. Ferner betrifft die Erfindung noch eine Steuervorrichtung.

Im Folgenden wird unter einem Linienelement hier z.B. eine gerade Linie, ein Kreiselement oder ein höherwertiges Geometrieelement (beispielsweise Spline) oder eine Kombination davon verstanden.

Bei der Bearbeitung eines Werkstückes (z.B. im Werkzeug- und Formenbau) werden in aller Regel Bahnprogramme, auf CNC-Basis, zur Steuerung der jeweiligen Maschine, insbesondere Fräsmaschine, verwendet. Bahnprogramme (auch Teileprogramme genannt) werden heutzutage hauptsächlich durch CAD/CAM/PP-Systeme generiert. Dabei wird der herzustellende Körper bzw. Gegenstand zunächst mit einem CAD-Programm entworfen (Computer Aided Design) und anschließend durch ein CAM-Programm (Computer Aided Manufacturing) in einen maschinenunabhängigen Code (beschreibt den Bearbeitungsablauf) übersetzt. Ein Post-Prozessor (PP) übersetzt den maschinenunabhängigen Code in einen maschinenabhängigen Code, das sog. Bahnprogramm auf CNC-Basis, das zur Ansteuerung der jeweils konkreten Maschine genutzt werden kann. Die Bearbeitung wird dabei in unterschiedliche Schritte unterteilt, z.B. dem Schruppen, Vorschlichten und Schlichten.

Beim Schlichtprozess beispielsweise werden die zu bearbeitenden bzw. herzustellenden Oberflächen im Wesentlichen in gleichen Abständen verlaufende Bahnprogrammen zerlegt, welche die Oberflächenkontur des Werkstücks beschreiben, die dann beispielsweise in einem Zerspannungsprozess durch eine Fräsmaschine abgefahren werden. Ein derartiges Bahnprogramm ist eine Bahn, die aus Stützpunkten besteht, welche paarweise durch Linienelemente (nachfolgend auch Linearsätze genannt) verbunden sind.

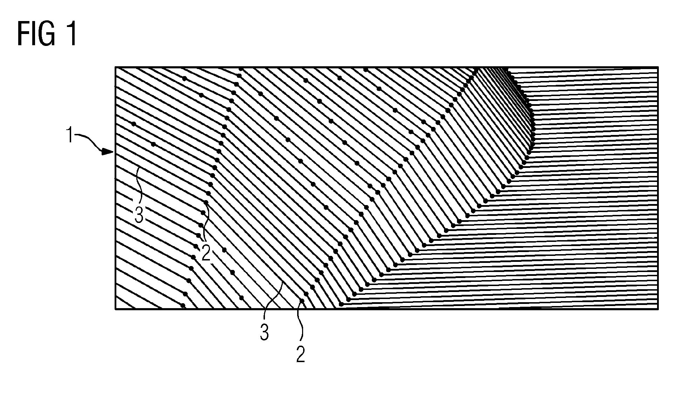

Ein derartiges Programm bzw. seine grafische Visualisierung ist in FIG 1 ausschnittsweise wiedergegeben. Eine Oberflächenkontur soll hier mit zahlreichen nebeneinander verlaufenden Fräsbahnen 1 (d.h. Fräsbahnabschnitte mit näherungsweise gleichem Abstand zueinander) erzeugt werden. Jede der Fräsbahnen besteht aus mehreren Stützpunkten 2 und mehreren Linearabschnitten 3. Zwischen jeweils zwei benachbarten Stützpunkten 2 befindet sich ein Linienelement bzw. ein Linearsatz, der diese beiden Stützpunkte 2 verbindet.

Das in dem CAD/CAM/PP-System entstandene Bahnprogramm wird üblicherweise auf eine Maschine mit einer NC-Steuerung aufgespielt und anschließend durch einen Maschinenbediener auf der Maschine mithilfe der NC-Steuerung verfahren. Dabei betrachtet eine NC-Steuerung jeden Fräsbahnabschnitt einzeln mit einem gewissen Zeit- und Entfernungshorizont in die Zukunft (Look-Ahead) und wertet Abweichungen aus.

Das Bahnprogramm, welches in einer CNC-Programmiersprache erstellt worden sein kann, wird dabei vorab erstellt und zum Zeitpunkt der Abarbeitung durch die CNC-Steuerung nicht mehr modifiziert. Im Bahnprogramm vorab festgelegt sind dabei die Bearbeitungstechnologie, die Werkzeuge, die Technologieparameter wie Spindeldrehzahl, die Maschinenfunktionen, die abzufahrende Bahnkurve und Orientierung sowie der zugehörige Vorschub. Die im Bahnprogramm festgelegten Werte werden von der CNC-Steuerung in aller Regel nicht hinterfragt. Das Bahnprogramm selbst wird vor der Bearbeitung in einem CAM-System oder einem anderen Programmiersystem erstellt und danach der CNC-Steuerung zur Abarbeitung bekanntgegeben.

Dieses Vorgehen erlaubt keine selbstständige Modifikation der Bahngeometrie oder der zugehörigen Technologieparameter zum Zeitpunkt der Abarbeitung des CNC-Programms durch die CNC-Steuerung, es sei denn durch manuellen Bedienereingriff. Dadurch ist ein mögliches Optimum hinsichtlich minimaler Bearbeitungszeit beziehungsweise voller Ausnutzung der Werkzeug- und Maschinenmöglichkeiten wie Werkzeugstandzeit, Zerspanleistung oder Dynamik nicht zu erreichen.

Darüber hinaus wird dieselbe Bearbeitungsaufgabe von unterschiedlichen Programmierern unterschiedlich gelöst und auf unterschiedlichen Maschinentypen unterschiedlich abgefahren. Selbst bei gleichen Maschineneigenschaften, d.h. gleichem Maschinentyp wird in unterschiedlichen Fertigungsbetrieben aufgrund unterschiedlicher Programmierkenntnisse und -strategien unterschiedliche Produktivität in Hinsicht auf Bearbeitungszeit, Qualität und Kosten erzielt werden.

Der Erfindung liegt die Aufgabe zugrunde, ein Verfahren und eine Steuervorrichtung anzugeben, welche eine verbesserte Bearbeitungszeit und volle Ausnutzung der Werkzeug- und Maschinenmöglichkeiten im Hinblick auf den Stand der Technik aufweisen.

Die auf das Verfahren bezogene Aufgabe wird gelöst durch die Angabe eines Verfahrens zum Erzeugen von Steuerdaten zum Steuern eines Werkzeugs an einer Werkzeugmaschine zum Bearbeiten eines eingespannten Werkstücks durch einen Bearbeitungsprozess, insbesondere Zerspanen, wobei die Werkzeugmaschine eine Steuervorrichtung und ein Werkzeug umfasst, zum Steuern des Werkzeugs in Bezug auf das eingespannte Werkstück mit einer dreidimensionalen freien Werkzeugbewegung durch:
- Erzeugen eines Bahnprogramms anhand von einer Sollgeometrie generierten Sollparameter zur Steuerung der Werkzeugmaschine, wobei das Bahnprogramm zumindest eine Bahn beschreibt, wobei die Bahn aus mehreren Stützpunkten und Linienelementen besteht und jedes Linienelementen ein Paar der Stützpunkte miteinander verbindet,
- Steuerung der Werkzeugmaschine entsprechend des erzeugten Bahnprogramms,
- Erfassung von Istparametern des Bearbeitungsprozesses durch eine Feedbackschleife, und
- Iterative Optimierung des Bahnprogramms anhand der erfassten Istparameter zur Generierung eines neuen Bahnprogramm_neu mit einer neuen Bahn_neu, welche während der Bearbeitung der Werkzeugmaschine zugeführt wird und welche das bisherige Bahnprogramm und die bisherige Bahn während der Bearbeitung dynamisch ändern und/oder dynamisch ersetzen.

Die auf die Vorrichtung bezogene Aufgabe wird gelöst durch die Angabe einer Steuervorrichtung zum Erzeugen von Steuerdaten zum Steuern eines Werkzeugs an einer Werkzeugmaschine zum Bearbeiten eines eingespannten Werkstücks durch einen Bearbeitungsprozess, insbesondere Zerspanen, wobei die Werkzeugmaschine eine Steuervorrichtung und ein Werkzeug umfasst, zum Steuern des Werkzeugs in Bezug auf das eingespannte Werkstück mit einer dreidimensionalen freien Werkzeugbewegung durch das Erzeugen eines Bahnprogramms anhand von einer Sollgeometrie generierten Sollparameter zur Steuerung der Werkzeugmaschine, wobei das Bahnprogramm zumindest eine Bahn beschreibt, wobei die Bahn aus mehreren Stützpunkten und Linienelementen besteht und jedes Linienelementen ein Paar der Stützpunkte miteinander verbindet, und die anschließende Steuerung der Werkzeugmaschine entsprechend des erzeugten Bahnprogramms vorgesehen ist, wobei eine Feedbackschleife zur Erfassung von Istparametern des Bearbeitungsprozesses vorgesehen ist, und wobei eine iterative Optimierung des Bahnprogramms anhand der erfassten Istparameter zur Generierung eines neues Bahnprogramm_neu mit einer neuen Bahn_neu vorgesehen ist, welche während der Bearbeitung der Werkzeugmaschine zugeführt werden und welche das bisherige Bahnprogramm und die bisherige Bahn während der Bearbeitung dynamisch ändern und/oder dynamisch ersetzen.

Erfindungsgemäß ist nun eine iterative Optimierung des Bahnprogramms anhand der erfassten Istparameter durch die Änderung von Technologieparametern, während der laufenden Bearbeitung, möglich. Dabei können die Istparameter auch die Zustandsgrößen umfassen. Dabei können die Technologieparameter für eine Optimierung in Werkzeugtyp, bearbeitungsrelevante Technologieparameter und maschinenbezogene Informationen unterteilt werden. Werkzeugtypen sind beispielsweise der Werkzeugdurchmesser, die Werkzeuglänge als auch beispielsweise die Zähnezahl. Als bearbeitungsrelevante Technologieparameter können beispielsweise die Schnittgeschwindigkeit, der Vorschub / Zahn, die seitliche Zustellung als auch die Zustellung der Tiefe herangezogen werden. Als maschinenbezogene Informationen sind beispielsweise die maximal erlaubte Spindelleistung, das maximale erlaubte Spindelmoment, und die maximal erlaubte Achsdynamik sowie der maximal erlaubte Vorschub zu nennen. Zusätzlich kann unter Technologieparameter auch die Reihenfolge der Bearbeitung mit unterschiedlichen Werkzeugen verstanden werden. Die Änderung der Technologieparameter schafft eindeutig festgelegte Randbedingungen zur Erzeugung des neuen Bahnprogramm neu, welches eine neue Bahn bzw. Bahn und Orientierung aufweist.

Durch die Erfindung wird eine wirtschaftlich optimale Ausnutzung der Möglichkeiten des Werkzeugs und der Maschinenfähigkeiten ermöglicht.

Die vorliegende Erfindung zeigt einen Weg auf zur Dynamisierung des etablierten Vorgehens, d.h. das Abarbeiten eines vorab generierten NC-Programms, mit dem Ziel einer deutlichen Reduzierung der Bearbeitungszeit bzw. Steigerung der Wirtschaftlichkeit. Zur dynamischen Beeinflussung von Technologieparametern und damit auch Bahn und Orientierung während des Ablaufs einer Bearbeitung ist erfindungsgemäß eine Feedbackschleife aus dem Bearbeitungsprozess zur Messung von Istparametern zur dynamischen Berechnung einer neuen Bahn vorgesehen.

Durch die Erfindung wird die gleiche Produktivität bei identischen Maschinen und identischen Werkzeugen unabhängig vom Know-How des Programmierers erzielt.

Die erfindungsgemäße Dynamisierung der CNC-Bearbeitung erfolgt durch Einflussnahme auf mehr Parameter als nur auf den Parameter "Vorschub".

Erfindungsgemäß ist eine ganzheitliche Optimierung der Bearbeitung nur dann möglich, wenn eine ganzheitliche Anpassung sowohl von Technologieparametern als auch des Bahnverlaufs während der laufenden Bearbeitung ermöglicht wird; also insbesondere eine Abweichung von beispielsweise einer programmierten Bahn und Orientierung zur Laufzeit erlaubt wird. Erst dadurch wird eine optimale Ausnutzung der Möglichkeiten des Werkzeugs und der Maschinenfähigkeiten ermöglicht.

Durch die Erfindung wird daher eine steuerungsintegrierte dynamische Optimierung der Bearbeitung durch Berücksichtigung der spezifischen Maschinenfähigkeiten ("Prozessanalyse") und Technologiemöglichkeiten ermöglicht.

Als weitere Vorteile sind die Reduzierung des Programmieraufwandes, die Reduzierung der Bearbeitungszeit bzw. die Erhöhung der Produktivität, die Berücksichtigung aller geladenen Werkzeuge sowie beispielsweise eine automatische Technologieoptimierung zu nennen. Auch kann die Maschine als selbstlernende Maschine programmiert werden.

In den Unteransprüchen sind weitere vorteilhafte Maßnahmen aufgelistet, die beliebig miteinander kombiniert werden können, um weitere Vorteile zu erzielen.

Bevorzugt ist zumindest eine weitere iterative Optimierung des erzeugten Bahnprogramm_neu und der Bahn_neu möglich. D.h. das Bahnprogramm und die Bahn selber kann laufend iterativ optimiert werden.

Bevorzugt ist eine CAM-Funktionalität zur Änderung der Reihenfolge der Stützpunkte vorgesehen. Die CAM-Funktionalität muss in Echtzeit ablauffähig sein, d.h. auf ein erkanntes Optimierungspotential umgehend reagieren können und die CNC-Steuerung während der Abarbeitung mit einem optimierten CNC-Programm bzw. mit einem optimierten Bahnverlauf versorgen können.

In einer weiteren bevorzugten Ausgestaltung ist das Bahnprogramm als auch das Bahnprogramm neu als ein CNC-Programm ausgeführt, wobei das CNC-Programm des Bahnprogramm_neu das bisherige CNC-Programm des Bahnprogramms während der Abarbeitung ändert und/oder ersetzt. Auch andere Maschinensprachen sind jedoch möglich.

Bevorzugt beinhaltet das Bahnprogramm_neu eine Übergangsstrategie, insbesondere ein Übergangsprogramm mit Übergangsbahn. Damit kann ein verbesserter, dynamischer Übergang von dem alten Programm auf das neue Programm erzielt werden.

In einer beispielhaften Ausgestaltung wird die iterative Optimierung des Bahnprogramms anhand der erfassten Istparameter zur Generierung eines neues Bahnprogramm_neu mit einer neuen Bahn_neu in Echtzeit durch die Feedbackschleife bewerkstelligt, welches während der Bearbeitung durch die Werkzeugmaschine dynamisch in Echtzeit zugeführt wird und welches das bisherige Bahnprogramm ändert und/oder ersetzt.

In einer beispielhaften Ausgestaltung ist eine Datenbank vorgesehen, welche zumindest das Bahnprogramm sowie das Bahnprogramm_neu speichert. In einer bevorzugten Ausgestaltung werden zusätzlich die Technologieparameter / Technologieparameter_neu als auch die erfassten Istparameter des Bahnprogramms als auch des Bahnprogramm_neu gespeichert. Damit kann die Historie auch verwertet und für nächste Werkstücke herangezogen werden.

Dadurch können Erfahrungswerte generiert werden, welche später für eine selbstlernende Maschine oder für eine bessere, fehlerfreie Bearbeitung eingesetzt werden.

Bevorzugt ist das Bahnprogramm_neu manuell oder automatisch der Steuerungsvorrichtung zuführbar. Dies kann durch den Programmierer festgelegt werden.

Weitere Merkmale, Eigenschaften und Vorteile der vorliegenden Erfindung ergeben sich aus der nachfolgenden Beschreibung unter Bezugnahme auf die beiliegende Figuren. Darin zeigen schematisch:
- FIG 1:: eine bildliche Wiedergabe eines NC-Bahnprogramms gemäß dem Stand der Technik,
- FIG 2:: einen Bearbeitungsprozess eines Werkstücks durch ein Werkzeug nach dem Stand der Technik,
- FIG 3:: eine dynamische Programm- und Bahngenerierung für CNC gesteuerte Werkzeugmaschinen gemäß der Erfindung,
- FIG 4:: eine beispielhafte schematische Abfolge der Erfindung,
- FIG 5:: als erstes Beispiel das Schruppen (Abzeilen) mit vom Programmierer festgelegter Schnitttiefe nach dem Stand der Technik,
- FIG 6:: das korrespondierende Schruppen (Abzeilen) mit dynamisch optimierter Schnitttiefe gemäß der Erfindung,
- FIG 7:: als zweites Beispiel das Planfräsen mit vom Programmierer festgelegtem Werkzeugdurchmesser nach dem Stand der Technik,
- FIG 8:: das korrespondierende Planfräsen mit optimiertem Werkzeugdurchmesser gemäß der Erfindung,
- FIG 9:: als drittes Beispiel das Planfräsen mit durch den Programmierer vorgegebener seitlicher Zustellung nach dem Stand der Technik,
- FIG 10:: das korrespondierende Planfräsen mit dynamisch optimierter seitlicher Zustellung gemäß der Erfindung.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

FIG 1 zeigt dabei eine bildliche Wiedergabe eines Bahnprogramms gemäß dem Stand der Technik und wurde bereits beschrieben.

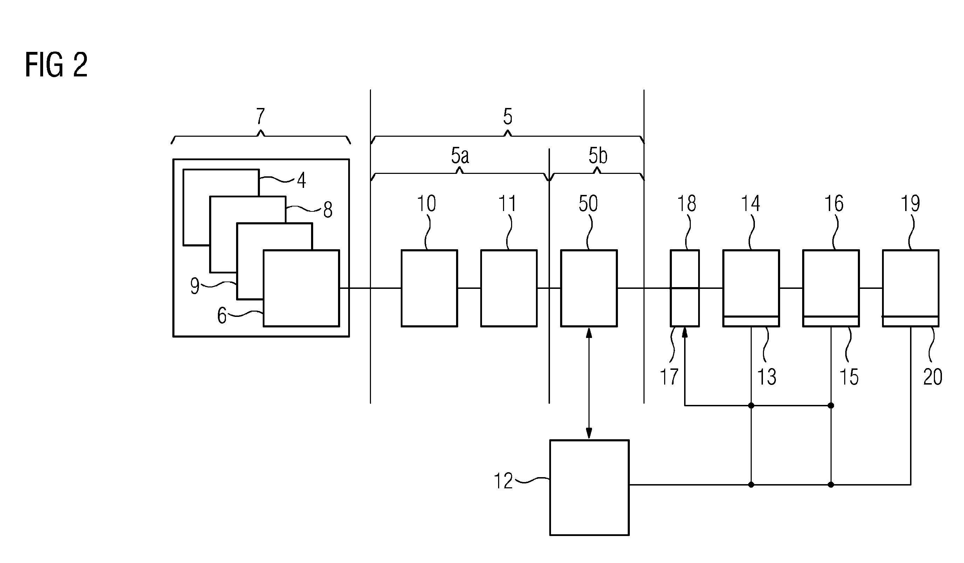

FIG 2 zeigt schematisch einen Bearbeitungsprozess eines Werkstücks durch ein Werkzeug nach dem Stand der Technik bzw. den heute üblichen Ablauf in der CAD-CAM-CNC-Prozesskette. CNC-Werkzeugmaschinen werden heute über das Bahnprogramm bspw. nach Din 66025 angesteuert.

Bei derartigen Werkstückbearbeitungsvorrichtungen wird die Positionierung und Bewegung eines bei der Bearbeitung der Werkstücke eingesetzten Werkzeugs relativ zu einem Werkstück mittels einer numerischen Steuereinrichtung (CNC-Steuerung 5) kontrolliert.

Das CNC-Bahnprogramm 6 wird dabei vorab an einem Programmierplatz 7 erstellt und ist zum Zeitpunkt der Abarbeitung durch die CNC-Steuerung 5 nicht mehr modifiziert.

Dazu wird ausgehend von CAD-Daten 4 die Bearbeitung vom Programmierer in einzelne Bearbeitungselemente 8 herunter gebrochen und den einzelnen Bearbeitungselementen 8 Technologieparameter 9 zugeordnet. Anschließend wird vom CAM-System das Bahnprogramm 6 erstellt.

Der Programmierplatz 7 kann als ein Teil der Steuerung 5 ausgeführt sein.

Möglich ist auch die Definition ganzer Bearbeitungsfeatures, wie z.B. Taschen, über normierte Schnittstellen. Jedoch werden die erstellten CNC-Programme auch hier zum Zeitpunkt der Abarbeitung auf der CNC-Steuerung nicht mehr modifiziert, bis auf wenige Ausnahmen. Die Modifikation der Angaben im Bahnprogramm 6 ist heute nur in begrenztem Umfang bekannt. Die CNC-Steuerung 5 ist in einen nicht-zyklischen Teil 5a und einen zyklischen Teil 5b aufgeteilt. Der nicht-zyklische Teil 5a umfasst dabei 10 die Geometrieaufbereitung und 11 die Geschwindigkeitsführung, inklusive Look-Ahead, und das Erzeugen von transformierten Steuerdaten durch Ausführen einer Transformation der Steuerdaten in Abhängigkeit der ermittelten Einspannsituation-Abweichung bzw. Maschinenkinematik. Der zyklische Teil 5b umfasst dabei vor allem die Interpolation und ggf. die Lageregelung 50.

Eine Modifikation der Technologieparameter zur Laufzeit im zyklischen Teil 5b als auch im Teil 5a sind heute nur in begrenztem Umfang bekannt. Dazu gehören die Reduzierung der programmierten Bahngeschwindigkeit aufgrund der beschränkten dynamischen Möglichkeiten der Maschinenachsen der Werkzeugmaschine (Geschwindigkeitsreduktion) oder durch den Bediener und die Modifikation der Vorschubgeschwindigkeit durch Adaptive Control 12 in Abhängigkeit der Spindelleistung sowie die Modifikation der Spindeldrehzahl zur Vermeidung von Rattern durch Überlagerung eines Wobbelsignals sowie eines Störsignals oder dauerhafte Modifikation der Spindeldrehzahl.

Dazu werden im Stand der Technik der Technologieparameter Vorschub und die Drehzahl im Betrieb der Werkzeugmaschine durch Sensoren 13 bei der Werkzeugmaschine 14, Sensoren 15 bei der Spindel 16 als auch im Bearbeitungsprozess 19 durch Sensoren 20 oder im Regler 17 des Antriebs 18 ermittelt und an eine Prozessanalyse z.B. dem Adaptive Control 12, zur Analyse gesendet. Das Adaptive Control 12 kann daher nur lediglich die Drehzahl und den Vorschub beeinflussen. Dieses bringt zudem die Technologieparameter lediglich zyklisch in die CNC-Steuerung 5 ein. Eine Beeinflussung weiterer Parameter erfolgt nicht.

Zusammenfassend wird daher im Stand der Technik lediglich Einfluss auf zwei Technologieparameter genommen, nämlich den Vorschub und die Drehzahl. Die einmal vorab programmierte Bahn wird nicht verlassen. Es ist daher keine tiefgreifende Optimierung im Sinne der vorliegenden Erfindung möglich. Dadurch ist ein mögliches Optimum hinsichtlich minimaler Bearbeitungszeit und voller Ausnutzung der Werkzeug- und Maschinenmöglichkeiten wie Zerspanleistung oder Dynamik nicht zu erreichen.

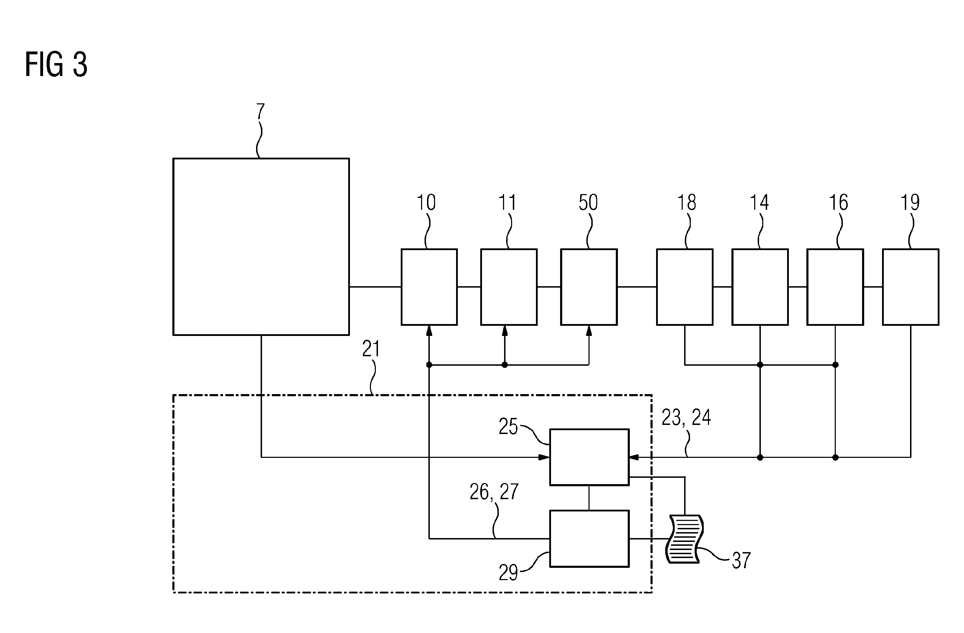

Die vorliegende Erfindung in FIG 3 zeigt einen Weg auf zur Dynamisierung dieses etablierten Vorgehens mit dem Ziel einer deutlichen Reduzierung der Bearbeitungszeit bzw. Steigerung der Produktivität. Ziel ist es, gleiche Produktivität bei identischen Maschinen und identischen Werkzeugen zu erzielen, unabhängig vom Know-How des Programmierers.

Die erfindungsgemäße Dynamisierung der CNC-Bearbeitung erfolgt durch Einflussnahme auf mehr Parameter als nur auf den Parameter "Vorschub" oder "Drehzahl". Erfindungsgemäß wurde erkannt, dass eine ganzheitliche Optimierung der Bearbeitung nur dann möglich ist, wenn eine ganzheitliche Anpassung sowohl von Technologieparametern als auch des Bahnverlaufs während der laufenden Bearbeitung ermöglicht wird - also insbesondere eine Abweichung von der programmierten Bahn und Orientierung zur Laufzeit erlaubt wird. Erst durch die Abweichung von der programmierten Bahn und Orientierung zur Laufzeit wird eine optimale Ausnutzung der Möglichkeiten des Werkzeugs und der Maschinenfähigkeiten ermöglicht.

Zunächst wird - wie im Stand der Technik- an einem Programmierplatz 7 (FIG 2) ein durch CAD-Daten 4 (FIG 2) beschriebenes Sollbauteil in Bearbeitungselemente 8 (FIG 2) zerlegt, diesem Technologieparameter zugeordnet und im CAM-System 9 (FIG 2) ein CNC-Bahnprogramm 6 generiert und an die CNC-Steuerung 5 gesendet. Über die Sensoren 20,15 und 13 (FIG 2) im Bearbeitungsprozess 19, in der Spindel 16, und in der Werkzeugmaschine 14 als auch der Regler 17 (FIG 2) in dem Antrieb 18 werden die Istparameter 24 erfasst. Dabei können die Istparameter 24 auch die Zustandsgrößen 23 umfassen.

Erfindungsgemäß ist nun eine Feedbackschleife 21 aus den Sensoren 20,15,13 und dem Regler 17 zur Messung von Zustandsgrößen 23 und der Istparameter 24 zur Beeinflussung des aktuellen Bahnprogramms 6 (FIG 2) und zur dynamischen Berechnung einer neuen Bahn vorgesehen.

Hierfür wird nun in der Feedbackschleife 21 eine Bearbeitungsanalyse 25 durchgeführt und durch diese ein neues Bahnprogramm_neu 26 mit entsprechenden aktualisierten Technologieparameter_neu 27 generiert. Anschließend wird das aktuelle Bahnprogramm 6 in ein Bahnprogramm_neu 26 und eine neue optimierte Bahn_neu sowie die aktuellen Technologieparameter 9 (FIG 2) in neue Technologieparameter_neu 27 geändert und/oder ersetzt. Die neuen Technologieparameter_neu 27 und das neue Bahnprogramm_neu 26 werden dabei mit Hilfe einer in Echtzeit ablauffähigen CAM-Funktionalität berechnet. Auch kann zuvor eine Übergangsstrategie 29 mit einem Übergangsprogramm und Übergangsparametern erzeugt werden, welches anschließend das alte Bahnprogramm in das Bahnprogramm_neu 26 überführt. Damit kann ein dynamischer Übergang von dem aktuellen Bahnprogramm 6 (Bearbeitung "Aktuell") (FIG 2) auf das neue Bahnprogramm_neu 26 (Bearbeitung "Neu") sichergestellt werden. Das Bahnprogramm_neu 26 und die neuen Technologieparameter_neu 27 werden nun anschließend zum aktuellen Bahnprogramm 6. Diese werden in der CNC-Steuerung 5 (FIG 2) sowohl im zyklischen Teil 5a (FIG 2) als auch im nicht-zyklischen Teil 5b (FIG 2) in Echtzeit, d.h. während der Bearbeitung ersetzt und führen zur Messung neuer aktueller Zustandsgrößen 23 und Istparameter 24. Das in Echtzeit ablauffähige CAM-System kann auf ein erkanntes Optimierungspotential umgehend reagieren und versorgt die CNC-Steuerung 5 (FIG 2) während der Abarbeitung mit einem optimierten CNC-Bahnprogramm bzw. mit einem optimierten Bahnverlauf. Die Details der Berechnungsschritte und der zugrundeliegenden Daten können in einer Datenbank 37 gespeichert werden.

Durch die Erfindung wird somit eine dynamische Beeinflussung von Technologieparametern und damit von Bahn, Orientierung während dem Ablauf einer Bearbeitung ermöglicht.

Dabei können die Technologieparameter für eine Optimierung in Werkzeugtyp, bearbeitungsrelevante Technologieparameter und maschinenbezogene Informationen unterteilt werden. Werkzeugtypen sind beispielsweise der Werkzeugdurchmesser, die Werkzeuglänge als auch beispielsweise die Zähnezahl. Als bearbeitungsrelevante Technologieparameter können beispielsweise die Schnittgeschwindigkeit, der Vorschub / Zahn, die seitliche Zustellung als auch die Zustellung des Werkzeugs in der Tiefe herangezogen werden. Als maschinenbezogene Informationen sind beispielsweise die maximale mögliche Spindelleistung, das maximal mögliche Spindelmoment, und die maximal mögliche Achsdynamik sowie der maximal mögliche Vorschub zu nennen.

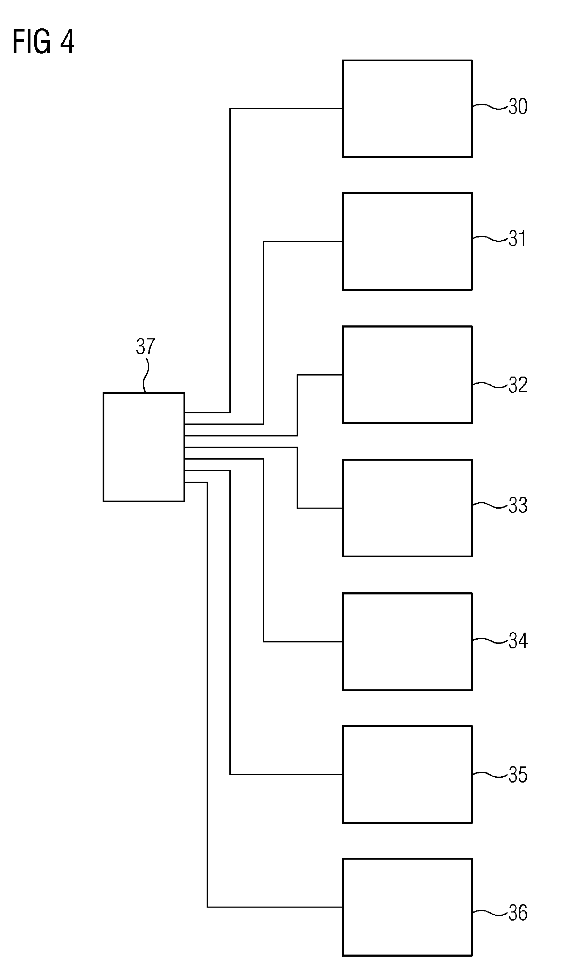

Nachfolgend wird an einem Beispiel die Erfindung schematisch anhand der nachfolgenden Schritte aufgezeigt (FIG 4):
- Schritt 30: Einlesen von CAD-Daten eines Rohteils und der CAD-Daten des Fertigteils (Sollbauteil) sowie Einlesen von Toleranzangaben und ggf. erkennen von Features,
- Schritt 31: Erstellen einer Bearbeitungsliste mit Hilfe der eingelesenen CAD-Daten im CAM-System, vor allem Erstellung eines Bahnprogramms. Hierbei ist zu beachten, dass im ersten Schritt noch keine automatisierte Erstellung notwendig ist. Der erste Schritt erfolgt in aller Regel in der Arbeitsvorbereitung am CAD-CAM-System,
- Schritt 32: Abarbeitung des NC-Bahnprogramms und Erfassung von Zustandsgrößen 23 und Istparametern 24 (FIG 3), Analyse der Zustandsgrößen 23 und Istparameter 24 (FIG 3), Berechnung von alternativen Bearbeitungsszenarien und Bewertung und Entscheidung, ob eine Optimierung der Bearbeitung möglich ist, um die Produktivität zu steigern. Bei Entscheidung für eine optimierte Bearbeitung können diese auch Vorschläge für das Nachladen von Werkzeugen enthalten,
- Schritt 33: Für die optimiert Bearbeitung: Generierung eines neuen Bahnprogramm_neu 26 (FIG 3) und einer neuen Bahn_neu (FIG 3) sowie einer Übergangsstrategie 29 (FIG 3) mit Hilfe der neuen Technologieparameter_neu 27 (FIG 3),
- Schritt 34: Automatische oder ggf. manuelle Änderung des alten Bahnprogramms 6 (FIG 2) und der alten Technologieparameter 9 (FIG 2) durch dynamisches Laden des neuen Bahnprogramm_neu 26 (FIG 3) sowie einer Übergangsstrategie 29 (FIG 3) und der neuen Technologieparameter_neu 27 in die CNC-Steuerung 5 (z.B. Wechsel der Frässtrategie und damit Änderung des Bahnprogramms 6), z.B. Möglichkeit des manuellen Tausches oder Nachladen von Werkzeugen durch die Änderung des Bahnprogramms 6 / und damit Änderung der Technologieparameter während der Bearbeitung inkl. der Übergangsstrategie 29 (FIG 3) vom aktuellen Bahnprogramm 6 / von aktuellen Technologieparametern 9 auf das neue Bahnprogramm_neu 26 / neue Technologieparameter_neu 27 oder z.B. von alter z-Zustellung auf neue z-Zustellung ermöglicht durch ein neues Werkzeug,
- Schritt 37: Speichern der Details der Berechnungsschritte und der zugrundeliegenden Daten in einer Datenbank (FIG 3),
- Schritt 35: Optional Wiederholung des Vorgangs ab Schritt 32, um zu prüfen, ob weiteres Optimierungspotential vorhanden ist. Abbruch der Optimierung, wenn keine wesentliche Verbesserung erkannt wird,
- Schritt 36: Abschluss der Bearbeitung mit dem aktuellen Bahnprogramm und aktuellen Technologieparametern und Speichern in der Datenbank 37.

Das bedeutet, dass die Neuberechnung als auch die nachfolgendenden Neuberechnungen des Bahnprogramms als auch der Technologieparameter in Echtzeit der CNC-Steuerung 5 zugeführt werden. Die Erkenntnisse werden in einer Datenbank 37 gespeichert (Material, Werkzeug, Operation, Fertigungsstrategie, Technologieparameter etc.).

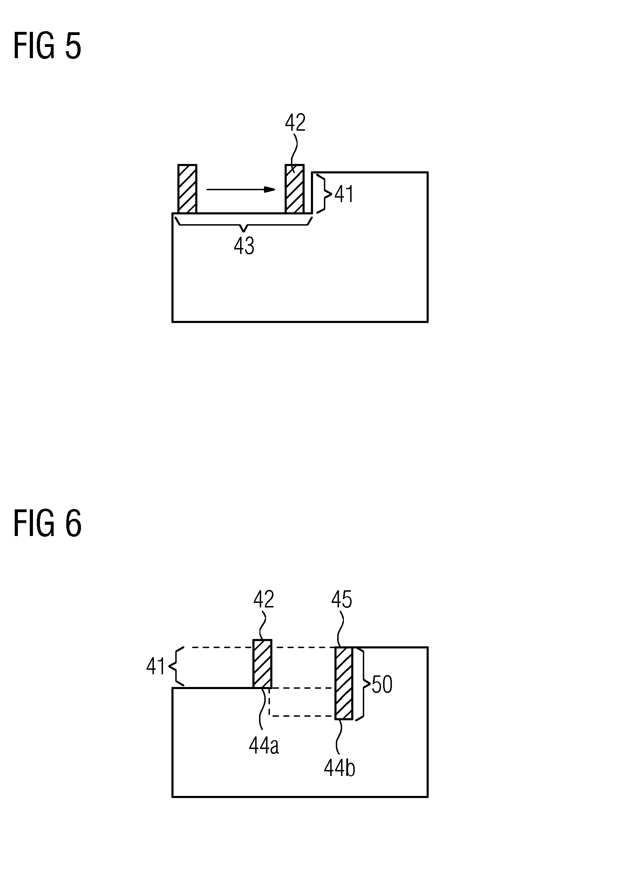

FIG 5, 6 zeigen den Stand der Technik im Vergleich zur Erfindung am Beispiel des Schruppens einer offenen Tasche, wobei als Schruppen das Abheben von Werkstoff mit großem Spanvolumen bezeichnet wird. Dabei ist in FIG 5 das Schruppen nach dem Stand der Technik zu sehen. Hier wird immer ein fest programmierter nicht veränderbarer Abtrag 41 über eine Wegstrecke 43 durch das Werkzeug 42 vom Material abgehoben. FIG 6 zeigt das Schruppen nach der Erfindung. Hierbei wird ebenfalls zunächst ein Abtrag 41 abgehoben. Im Punkte 44a beginnt jedoch die Optimierung dieses Abtrags durch die erfindungsgemäße Feedbackschleife 21 (FIG 3). Die geänderte Bahn mit dem neu gefundenen Abtrag 50 wird als Bahnprogramm neu 26 der CNC-Steuerung 5 (FIG 3) zugeführt, wodurch das alte NC-Bahnprogramm dynamisch, inklusive einer Übergangsbahn, welche bis zum Punkt 44b andauert, ersetzt wird. Es ergibt sich hierdurch eine reduzierte Bearbeitungszeit. Hierfür kann z.B. ein neues Werkzeug 45 eingewechselt werden.

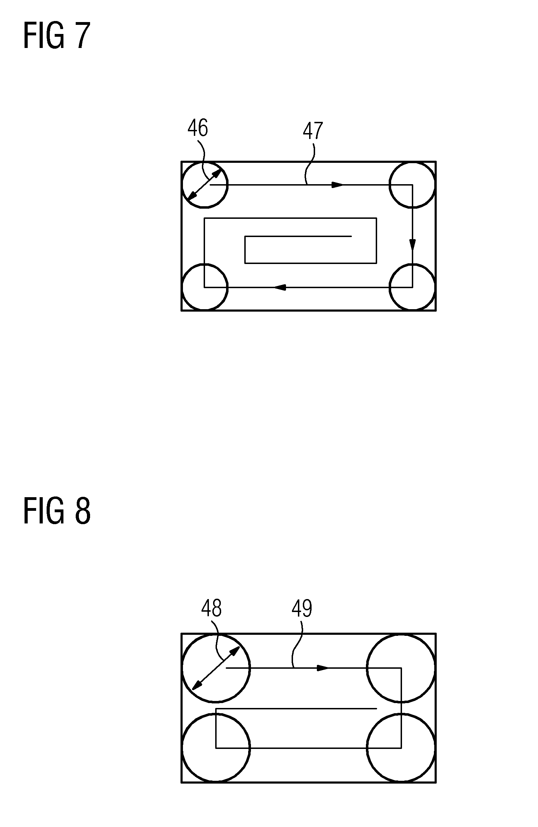

FIG 7, 8 zeigen den Stand der Technik bei einer Planfräs-Bearbeitung im Vergleich zur Erfindung am Beispiel eines einwechselbaren Werkzeugs. Dabei zeigt FIG 7 nach dem Stand der Technik die Bearbeitung eines Werkstücks durch ein Werkzeug mit dem Durchmesser 46. Dabei wird der Durchmesser 46 vom Programmierer festgelegt und ist während der gesamten Bahn 47 nicht veränderbar. Demgegenüber zeigt FIG 8 ein durch die Feedbackschleife 21 (FIG 3) eingewechseltes Werkzeug mit einem neuen Durchmesser 48 sowie einer neu berechneten Bahn 49. Dabei wurde ein Werkzeugwechsel durchgeführt, durch den eine kürzere Bearbeitungszeit erreicht wird.

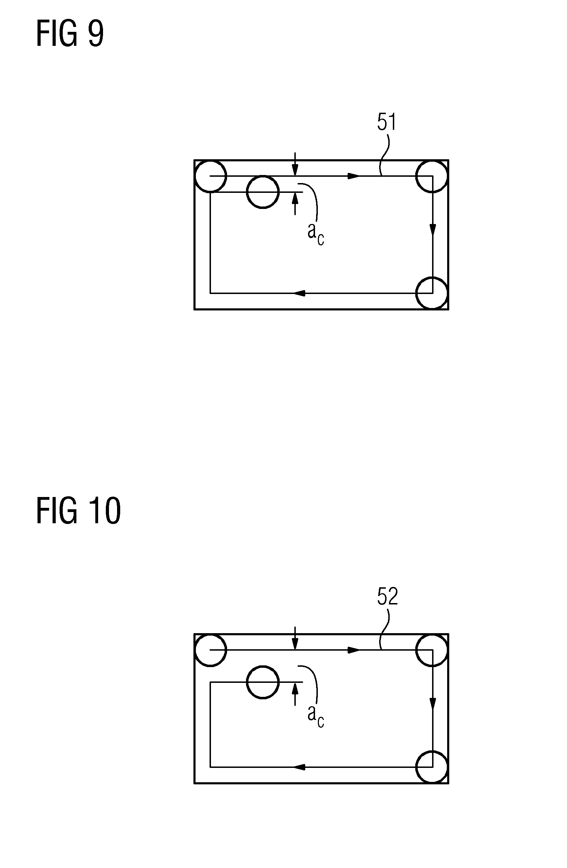

FIG 9, 10 ebenfalls Planfräsen zeigen im Vergleich eine Fräsbahn 51 und eine neue Fräsbahn 52. Dabei ist in FIG 9 nach dem Stand der Technik die Eingriffsmöglichkeit, der Vorschub, die Schnitttiefe als auch Vorschub / Zahn vom Programmierer festgelegt. FIG 10 zeigt die Fräsbahn durch die erfindungsgemäße Feedbackschleife 21 (FIG 3) dynamisch beeinflusst. Hier wurde die Überdeckung a_{c} des Werkzeugs (seitliche Zustellung) des Werkzeugs optimiert. In der Folge wurden die Schnittparameter geändert.

## Patentansprüche

1. Verfahren zum Erzeugen von Steuerdaten zum Steuern eines Werkzeugs an einer Werkzeugmaschine zum Bearbeiten eines eingespannten Werkstücks durch einen Bearbeitungsprozess, insbesondere Zerspanen, wobei die Werkzeugmaschine eine Steuervorrichtung und ein Werkzeug umfasst, zum Steuern des Werkzeugs in Bezug auf das eingespannte Werkstück mit einer dreidimensionalen freien Werkzeugbewegung durch:
- Erzeugen eines Bahnprogramms (6) anhand einer Sollgeometrie generierten Sollparameter zur Steuerung der Werkzeugmaschine, wobei das Bahnprogramm (6) zumindest eine Bahn beschreibt, wobei die Bahn aus mehreren Stützpunkten (2) und Linienelementen (3) besteht und jedes Linienelementen (3) ein Paar der Stützpunkte (2) miteinander verbindet,
- Steuerung der Werkzeugmaschine entsprechend des erzeugten Bahnprogramms (6),
**gekennzeichnet, durch**
- Erfassung von Istparametern (24) des Bearbeitungsprozesses **durch** eine Feedbackschleife (21),
- Iterative Optimierung des Bahnprogramms (6) anhand der erfassten Istparameter (24) zur Generierung eines neuen Bahnprogramm_neu (26) mit einer neuen Bahn_neu, welche während der Bearbeitung der Werkzeugmaschine zugeführt werden und welche das bisherige Bahnprogramm (6) und die bisherige Bahn während der Bearbeitung dynamisch ändern und/oder dynamisch ersetzen.

2. Verfahren zum Erzeugen von Steuerdaten zum Steuern eines Werkzeugs nach Anspruch 1,
**dadurch gekennzeichnet, dass** nach der Steuerung des Werkzeugs durch das bisherige Bahnprogramm (6) zunächst ein Steuern des Werkzeugs durch eine Übergangsstrategie, insbesondere ein Übergangsbahnprogramm mit Übergangsbahn erfolgt, welches zusätzlich zum Bahnprogramm_neu (26) erzeugt wird.

3. Verfahren zum Erzeugen von Steuerdaten zum Steuern eines Werkzeugs nach einem der vorhergehenden Ansprüche,
**dadurch gekennzeichnet, dass** zumindest eine weitere iterative Optimierung des erzeugten Bahnprogramm_neu (26) durchgeführt wird.

4. Steuervorrichtung zum Erzeugen von Steuerdaten zum Steuern eines Werkzeugs an einer Werkzeugmaschine zum Bearbeiten eines eingespannten Werkstücks durch einen Bearbeitungsprozess, insbesondere Zerspanen, wobei die Werkzeugmaschine eine Steuervorrichtung und ein Werkzeug umfasst, zum Steuern des Werkzeugs in Bezug auf das eingespannte Werkstück mit einer dreidimensionalen freien Werkzeugbewegung durch das Erzeugen eines Bahnprogramms (6) anhand von einer Sollgeometrie generierten Sollparameter zur Steuerung der Werkzeugmaschine, wobei das Bahnprogramm (6) zumindest eine Bahn beschreibt, wobei die Bahn aus mehreren Stützpunkten und Linienelementen besteht und jedes Linienelementen ein Paar der Stützpunkte miteinander verbindet, und die anschließende Steuerung der Werkzeugmaschine entsprechend des erzeugten Bahnprogramms (6) vorgesehen ist,
**dadurch gekennzeichnet, dass** eine Feedbackschleife (21) zur Erfassung von Istparametern (24) des Bearbeitungsprozesses vorgesehen ist, wobei eine iterative Optimierung des Bahnprogramms anhand der erfassten Istparameter (24) zur Generierung eines neues Bahnprogramm_neu (26) mit einer neuen Bahn_neu vorgesehen ist, welches während der Bearbeitung der Werkzeugmaschine zugeführt wird und welches das bisherige Bahnprogramm (6) und die bisherige Bahn während der Bearbeitung dynamisch ändert und/oder dynamisch ersetzt.

5. Steuervorrichtung zum Erzeugen von Steuerdaten zum Steuern nach Anspruch 4,
**dadurch gekennzeichnet, dass** zumindest eine weitere iterative Optimierung des erzeugten Bahnprogramm_neu (26) vorgesehen ist.

6. Steuervorrichtung zum Erzeugen von Steuerdaten zum Steuern nach Anspruch 4 oder 5,
**dadurch gekennzeichnet, dass** die dynamischen Technologieparameter_neu (27) der Werkzeugtyp und/oder bearbeitungsrelevante Technologiegrößen und/oder maschinenbezogenen Informationen sind, welche ebenfalls während der Bearbeitung dynamisch änderbar und/oder dynamisch ersetzbar sind.

7. Steuervorrichtung zum Erzeugen von Steuerdaten zum Steuern nach einem der vorhergehenden Ansprüche 4-6,
**dadurch gekennzeichnet, dass** eine CAM-Funktionalität zur Änderung der Reihenfolge der Stützpunkte (2) vorgesehen ist.

8. Steuervorrichtung zum Erzeugen von Steuerdaten zum Steuern nach Anspruch 7,
**dadurch gekennzeichnet, dass** die CAM-Funktionalität in Echtzeit ablauffähig ist.

9. Steuervorrichtung zum Erzeugen von Steuerdaten zum Steuern nach einem der vorhergehenden Ansprüche 4-7,
**dadurch gekennzeichnet, dass** das Bahnprogramm (6) als auch das Bahnprogramm_neu (26) als eine CNC-Programm ausgeführt ist, wobei das CNC-Programm des Bahnprogramm_neu (26) das bisherige CNC-Programm des Bahnprogramms (6) während der Abarbeitung ändert und/oder ersetzt.

10. Steuervorrichtung zum Erzeugen von Steuerdaten zum Steuern nach einem der vorhergehenden Ansprüche 4-8,
**dadurch gekennzeichnet, dass** das Bahnprogramm_neu (26) eine Übergangsstrategie (29), insbesondere ein Übergangsprogramm mit Übergangsbahn, beinhaltet.

11. Steuervorrichtung zum Erzeugen von Steuerdaten zum Steuern nach einem vorhergehenden Ansprüche 4-10,
**dadurch gekennzeichnet, dass** die iterative Optimierung des Bahnprogramms (6) anhand der erfassten Istparameter (24) zur Generierung eines neues Bahnprogramm_neu (26) mit einer neuen Bahn_neu in Echtzeit durch die Feedbackschleife (21) bewerkstelligbar ist, welche während der Bearbeitung durch die Werkzeugmaschine dynamisch in Echtzeit zugeführt werden und welche das bisherige Bahnprogramm (6) und die bisherige Bahn ändern und/oder ersetzen.

12. Steuervorrichtung zum Erzeugen von Steuerdaten zum Steuern nach einem vorhergehenden Ansprüche 4-10,
**dadurch gekennzeichnet, dass** die iterative Optimierung des Bahnprogramms (6) anhand der erfassten Istparameter (24) zur Generierung eines neues Bahnprogramm_neu (26) mit einer neuen Bahn_neu in zeitlich definierten Abständen durch die Feedbackschleife (21) bewerkstelligbar ist, welches während der Bearbeitung durch die Werkzeugmaschine dynamisch in zeitlich definierten Abständen zugeführt wird und welche das bisherige Bahnprogramm (6) und die bisherige Bahn ändern und/oder ersetzen.

13. Steuervorrichtung zum Erzeugen von Steuerdaten zum Steuern nach einem vorhergehenden Ansprüche 4-12,
**dadurch gekennzeichnet, dass** eine Datenbank (37) vorgesehen ist, welche zumindest das Bahnprogramm (6) sowie das Bahnprogramm_neu (26) speichert.

14. Steuervorrichtung zum Erzeugen von Steuerdaten zum Steuern nach Anspruch 13,
**dadurch gekennzeichnet**, d a s zusätzlich Technologieparameter (9)/ Technologieparameter_neu (27) als auch erfasste Istparameter (24) des Bahnprogramms (6) als auch des Bahnprogramm_neu in der Datenbank (37) speicherbar sind.

15. Steuervorrichtung zum Erzeugen von Steuerdaten zum Steuern nach einem der vorhergehenden Ansprüche 4-14,
**dadurch gekennzeichnet, dass** das Bahnprogramm_neu (26) manuell oder automatisch der Steuerungsvorrichtung zuführbar ist.
